# FASCICULE DE BREVET EUROPEEN

(11) **EP 0 507 659 B1**
(45) Date de publication et mention de la délivrance du brevet: **12.07.1995**
(21) Numéro de dépôt: 92400849.3
(22) Date de dépôt: 26.03.1992
(51) Int. Cl.: G21C 17/112

(54) **Dispositif de mesure de la température du fluide de refroidissement primaire d'un réacteur nucléaire à eau sous pression**
Vorrichtung zur Messung der Temperatur des primären Kühlmittels eines Druckwasserreaktors
Device for measuring the temperature of the primary coolant of a pressurised water nuclear reactor

(30) Priorité: 02.04.1991 FR 9103958
(43) Date de publication de la demande: 07.10.1992
(73) Titulaire: FRAMATOME, 92400 Courbevoie (FR)
(72) Inventeur: Bourgeon, Claude, F-38460 Cremieu (FR); Boulet, Michel, F-95240 Cormeilles en Parisis (FR); Tardy, Emmanuel, F-69001 Lyon (FR); Demonte, Daniel, F-01140 Saint Etienne sur Chalaronne (FR)
(74) Mandataire: Bouget, Lucien

(56) Documents cités:
- EP-A- 0 152 361
- GB-A- 734 702
- US-A- 4 510 343

## Description

La présente invention est relative à un dispositif de mesure de la température du fluide de refroidissement primaire d'un réacteur nucléaire à eau sous pression.

Les réacteurs nucléaires tels que les réacteurs nucléaires refroidis par de l'eau sous pression comportent une cuve dans laquelle est disposé le coeur du réacteur constitué par des assemblages combustibles et un circuit primaire comportant au moins une boucle sur laquelle est disposé un générateur de vapeur à l'intérieur duquel le fluide de refroidissement primaire du réacteur assure l'échauffement et la vaporisation d'eau d'alimentation. Chacune des boucles du circuit primaire comporte des tuyauteries de grand diamètre et de forte épaisseur dans lesquelles circule le fluide de refroidissement primaire. L'une des tuyauteries, ou branche chaude, relie la cuve au générateur de vapeur et assure le transfert du fluide primaire échauffé au contact du coeur dans la partie primaire du générateur de vapeur.

Une autre tuyauterie, ou branche froide, assure le retour du fluide de refroidissement dans la cuve, après son passage dans le générateur de vapeur.

Pour assurer la conduite et le contrôle de fonctionnement des réacteurs nucléaires, il est nécessaire de mesurer la température du fluide primaire qui doit être maintenue impérativement dans un intervalle prédéterminé, pour assurer un fonctionnement satisfaisant du réacteur nucléaire.

On connaît, par la demande de brevet EP-A-0 493 142 un dispositif de mesure de la température du fluide de refroidissement primaire d'un réacteur nucléaire à eau sous pression qui comporte au moins trois éléments de prélèvement de fluide de refroidissement traversant la paroi d'une partie sensiblement horizontale de la branche chaude, répartis à la périphérie de la branche chaude et un élément de réintroduction de fluide de refroidissement dans la branche chaude relié par une tuyauterie extérieure à la branche chaude, à chacun des éléments de prélèvement.

Une sonde de température est disposée à l'intérieur de chacun des éléments de prélèvement. De plus, une sonde de température peut être disposée également à l'intérieur de l'élément de réintroduction du fluide.

Dans le dispositif décrit, l'élément de réintroduction du fluide est constitué par une simple tubulure rapportée sur la branche chaude au niveau d'une ouverture de traversée de la paroi de cette branche chaude. Cet élément de réintroduction ne permet pas d'obtenir une vitesse de circulation importante du fluide dans le circuit du dispositif de mesure, cette vitesse de circulation étant très inférieure à la vitesse de circulation du fluide primaire dans la branche chaude. Il en résulte que le temps de réponse des sondes de température est important et que les mesures ne sont pas vraiment représentatives de la température instantanée du fluide primaire.

Le but de l'invention est donc de proposer un dispositif de mesure de la température du fluide de refroidissement primaire d'un réacteur nucléaire à eau sous pression comprenant une cuve dans laquelle est disposé le coeur du réacteur et un circuit primaire ayant au moins une boucle sur laquelle est disposé un générateur de vapeur et qui comporte des tuyauteries dans lesquelles circule le fluide de refroidissement primaire du réacteur, l'une des tuyauteries, ou branche chaude, reliant la cuve au générateur de vapeur et une autre tuyauterie, ou branche froide, assurant le retour du fluide de refroidissement provenant du générateur de vapeur dans la cuve, le dispositif de mesure comportant au moins trois éléments de prélèvement du fluide de refroidissement traversant la paroi d'une partie sensiblement horizontale de la branche chaude, répartis à la périphérie de la branche chaude et un élément de réintroduction de fluide de refroidissement dans la branche chaude relié par une tuyauterie extérieure à la branche chaude, à chacun des éléments de prélèvement ainsi qu'une sonde de température disposée à l'intérieur de chacun des éléments de prélèvement, ce dispositif de mesure permettant d'obtenir un temps de réponse réduit des sondes de mesure et une mesure représentative de la valeur instantanée de la température du fluide primaire.

Dans ce but, l'élément de réintroduction du fluide primaire comporte un corps tubulaire fixé sur la branche chaude au niveau d'une ouverture traversant sa paroi, dans une direction sensiblement radiale, ayant une partie en forme de doigt de gant disposée au moins partiellement à l'intérieur de la branche chaude et percée d'au moins une ouverture dirigée vers l'axe de la branche chaude et disposée à l'opposé de la partie frontale du doigt de gant attaquée par le courant de fluide et une partie extérieure à la branche chaude dans laquelle débouchent les tuyauteries de liaison aux éléments de prélèvement.

Afin de bien faire comprendre l'invention, on va maintenant décrire, à titre d'exemple non limitatif, un mode de réalisation du dispositif de mesure suivant l'invention.

La figure 1 est une vue schématique en élévation latérale d'une partie d'un dispositif de mesure de température suivant l'invention, situé sur une branche chaude du réacteur.

La figure 2 est une vue en coupe suivant 2-2 de la figure 1.

La figure 3 est une vue en coupe axiale de l'élément de réintroduction du fluide de refroidissement, du dispositif de mesure représenté sur les figures 1 et 2.

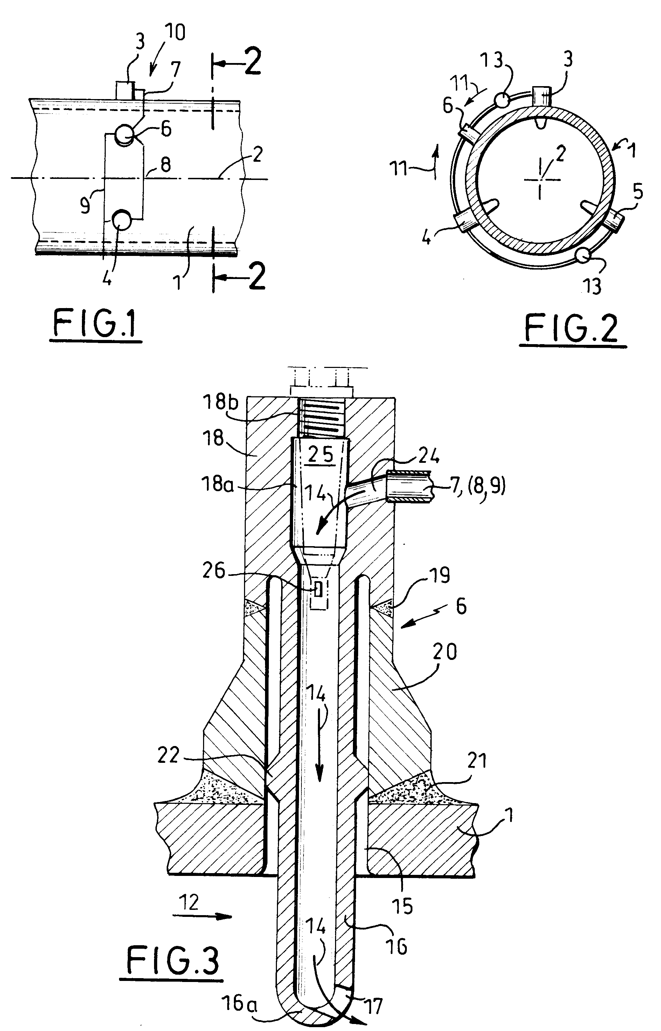

Sur la figure 1, on voit un dispositif de mesure suivant l'invention désigné de manière générale par le repère 10 et disposé sur une partie d'une branche chaude 1 du circuit primaire d'un réacteur nucléaire à eau sous pression ayant un axe 2 sensiblement horizontal.

Le dispositif représenté sur les figures 2 et 3 présente une structure générale identique au dispositif de mesure décrit dans la demande de brevet 90-16493.

Comme il est visible sur les figures 1 et 2, le dispositif de mesure 10 comporte trois éléments de prélèvement de fluide de refroidissement ou écopes 3, 4 et 5 et un élément de réintroduction 6 du fluide de refroidissement prélevé dans la tuyauterie primaire 1.

Les écopes de prélèvement 3, 4 et 5 sont disposées à 120° autour de l'axe 2 de la tuyauterie 16, dans une section droite sensiblement verticale de cette tuyauterie. Les écopes 4 et 5 sont disposées en-dessous de l'axe 2 de la tuyauterie 1 et l'écope 3, à la partie supérieure de la section droite de la tuyauterie 1.

Les écopes 3, 4 et 5 sont équipées de sondes de mesure de température, comme il sera expliqué plus loin.

Le dispositif de réintroduction 6 est placé dans une position diamétralement opposée par rapport à l'écope 5 située en-dessous de l'axe de la tuyauterie 16, au voisinage de sa partie inférieure.

Chacune des écopes 3, 4 et 5 est reliée à l'élément de réintroduction 6 par l'intermédiaire d'une tuyauterie de petit diamètre, respectivement 7, 8 et 9.

L'eau prélevée au niveau des écopes 3, 4 et 5 circule à l'extérieur de la canalisation 1, dans les tuyauteries 7, 8 et 9, pour être réintroduite dans la canalisation 1 par l'élément 6, comme indiqué par les flèches 11 représentées sur la figure 2.

Les écopes de prélèvement 3, 4 et 5 présentent une structure identique aux écopes de prélèvement décrites dans la demande de brevet EP-A-0 493 142. Ces écopes ont la forme de doigts de gant fixés dans une ouverture traversant la paroi de la canalisation 1, la paroi des doigts de gant étant traversée par un ensemble d'ouvertures permet tant le passage du fluide de refroidissement circulant dans la branche chaude, à l'intérieur de l'écope dans laquelle est disposée une sonde de température.

Le fluide de refroidissement primaire prélevé au niveau de l'écope est renvoyé en direction de l'élément de réintroduction par une des tuyauteries de petit diamètre 7, 8 et 9.

Il se produit donc une circulation de fluide de refroidissement dans le circuit de mesure. Des débitmètres 13 peuvent être placés sur le circuit pour mesurer et contrôler le débit de circulation du fluide de refroidissement dans le circuit de mesure.

Sur la figure 3, on a représenté l'élément de réintroduction 6 du dispositif de mesure suivant l'invention, permettant d'obtenir une vitesse de circulation accrue dans le circuit de mesure.

L'élément de réintroduction 6 est fixé sur la branche chaude 1, au niveau d'une ouverture de traversée 15 de la paroi de cette branche chaude.

Le sens et la direction de circulation du fluide de refroidissement dans la branche chaude sont indiqués par la flèche 12.

L'élément de réintroduction 6 est réalisé sous forme tubulaire et comporte une partie 16 en forme de doigt de gant pénétrant à l'intérieur de la branche chaude 1 et une partie externe 18 fixée par une soudure 19 sur un piquage 20 lui-même fixé par un joint de soudure 21, sur la surface extérieure de la branche chaude 1, au niveau de l'ouverture 15. Le piquage 20 qui présente une forme tronconique est fixé par sa partie à grand diamètre sur la branche chaude 1, par l'intermédiaire d'une surface de raccordement tronconique et par sa partie à faible diamètre à la partie supérieure 18 de l'élément de réintroduction 6.

La partie 16 en forme de doigt de gant de l'élément 6 est introduite dans la branche chaude 1 par l'ouverture 15 et comporte une extrémité fermée en forme de calotte sphérique 16a traversée par une ouverture 17 dont l'axe est incliné et concourant avec l'axe de la branche chaude 1. L'ouverture 17 est placée à l'opposé de la partie frontale du doigt de gant qui est attaquée par le courant de fluide 12. Le montage de l'élément 6 dans une position correcte, en ce qui concerne l'orientation de l'ouverture 17, est obtenu grâce à des repères tracés sur l'élément 6 et sur la surface de la canalisation ou grâce à des moyens d'assemblage qui sont mis en coïncidence au moment de la mise en place de l'élément 6 sur la canalisation 1.

L'extrémité fermée de la partie 16 de l'élément de réintroduction 6 est saillante à l'intérieur de la branche chaude 1. La partie 16 en forme de doigt de gant comporte une zone 22 élargie diamétralement constituant une couronne d'appui du doigt de gant à l'intérieur de l'alésage du piquage 20. On limite ainsi les vibrations du doigt de gant 16, lors de la circulation de l'eau de refroidissement réintroduite dans la branche chaude 1 par l'élément 6.

La partie supérieure 18 de l'élément 6 présente un diamètre extérieur sensiblement égal au diamètre extérieur de la partie à faible diamètre du piquage 20 et supérieur au diamètre extérieur du doigt de gant 16.

L'alésage intérieur de la partie supérieure 18 de l'élément 6 comporte une partie lisse 18a dont le diamètre est supérieur à l'alésage du doigt de gant 16 et qui constitue une chambre de récupération et de mélange du fluide de refroidissement qui est reliée, par l'intermédiaire de canaux tels que 24 traversant la paroi de la partie 18, à chacune des tuyauteries 7, 8 et 9 du circuit de mesure.

La partie supérieure 18 de l'élément 6 est percée, dans le prolongement axial de la chambre 18a, par une ouverture taraudée 18b dans laquelle est engagé dans la direction axiale et fixé par vissage, le support 25 d'une sonde de température 26.

Le support 25 vient en appui par un épaulement sur l'extrémité extérieure de la partie 18 de l'élément 6 et la sonde 26 fixée dans la partie d'extrémité du support 25 est disposée à l'entrée de l'alésage du doigt de gant 16 et à la sortie de la chambre 18a.

Le fluide de refroidissement du réacteur qui est prélevé par les écopes 3, 4 et 5 est réintroduit dans la chambre 18a de l'élément de réintroduction 6, par l'intermédiaire des tuyauteries 7, 8 et 9 et des canaux 24 correspondants.

Il se produit un mélange des courants de fluide de refroidissement provenant des différentes écopes de prélèvement, à l'intérieur de la chambre 18a, de sorte que la température mesurée par la sonde 26 correspond à une moyenne des températures des prélèvements effectués au niveau des écopes 3, 4 et 5.

De plus, la réalisation de l'élément 16 sous la forme d'un doigt de gant et la présence de l'ouverture 17 dont l'axe est dirigé vers l'axe de la branche chaude 1, à l'extrémité de cette partie 16, à l'intérieur de la branche chaude 1 et à l'opposé de la partie frontale du doigt de gant attaquée par le courant de fluide 12, produit un effet de succion ou de Venturi, si bien que le volume intérieur du doigt de gant 16 se trouve en dépression par rapport au circuit de prélèvement.

Cet effet de succion ou de Venturi entraîne une accélération du fluide primaire dans le circuit de prélèvement.

On réduit ainsi le temps de réponse des sondes de température, ce qui permet d'effectuer de manière satisfaisante une mesure instantanée de la température dans le circuit primaire.

On a pu obtenir, en utilisant le dispositif suivant l'invention, une vitesse d'écoulement du fluide de refroidissement dans le circuit de mesure, de l'ordre de 7 m/s, ce qui correspond environ à la moitié de la vitesse d'écoulement du fluide de refroidissement dans le circuit primaire.

L'invention ne se limite pas au mode de réalisation qui a été décrit.

C'est ainsi que l'élément de réintroduction 6 peut présenter une forme tubulaire différente de celle qui a été décrite et peut être rapporté sur la canalisation primaire, d'une manière différente.

L'invention s'applique à tout réacteur nucléaire comportant un fluide de refroidissement primaire circulant dans des tuyauteries de grand diamètre dont certaines parties au moins présentent une disposition sensiblement horizontale.

## Revendications

1. Dispositif de mesure de la température du fluide de refroidissement primaire d'un réacteur nucléaire comprenant une cuve dans laquelle est disposé le coeur du réacteur et un circuit primaire ayant au moins une boucle sur laquelle est disposé un générateur de vapeur et qui comporte des tuyauteries dans lesquelles circule le fluide de refroidissement primaire du réacteur, l'une des tuyauteries ou branche chaude (1) reliant la cuve au générateur de vapeur et une autre tuyauterie ou branche froide assurant le retour du fluide de refroidissement provenant du générateur de vapeur dans la cuve, le dispositif de mesure (10) comportant au moins trois éléments de prélèvement de fluide de refroidissement (3, 4, 5) traversant la paroi d'une partie sensiblement horizontale de la branche chaude (1), répartis à la périphérie de la branche chaude et un élément (6) de réintroduction de fluide de refroidissement dans la branche chaude (1) relié par une tuyauterie (7, 8, 9) extérieure à la branche chaude, à chacun des éléments de prélèvement (3, 4, 5), ainsi que des sondes de température (26) disposées à l'intérieur de chacun des éléments de prélèvement, caractérisé par le fait que l'élément de réintroduction (6) du fluide primaire comporte un corps tubulaire fixé sur la branche chaude (1) au niveau d'une ouverture (15) traversant sa paroi, dans une direction sensiblement radiale, ayant une partie (16) en forme de doigt de gant disposée au moins partiellement à l'intérieur de la branche chaude (1) et percée d'au moins une ouverture (17) dirigée vers l'axe de la branche chaude (1) et disposée à l'opposé de la partie frontale du doigt de gant attaquée par le courant de fluide (12) et une partie (18) extérieure à la branche chaude, dans laquelle débouchent des tuyauteries (7, 8, 9) de liaison aux éléments de prélèvement (3, 4, 5).

2. Dispositif suivant la revendication 1, caractérisé par le fait que la partie (16) en forme de doigt de gant de l'élément de réintroduction (6) comporte une partie (22) élargie diamétralement en forme de couronne et saillante vers l'extérieur, de manière à assurer le maintien de la partie (16) en forme de doigt de gant à l'intérieur de l'ouverture (15) traversant la paroi de la branche chaude (1).

3. Dispositif suivant l'une quelconque des revendications 1 et 2, caractérisé par le fait que la partie extérieure (18) de l'élément de réintroduction (6) est fixée par soudage sur un piquage intermédiaire (20) lui-même fixé par soudage sur la branche chaude (1), au niveau de l'ouverture (15).

4. Dispositif suivant l'une quelconque des revendications 1, 2 et 3, caractérisé par le fait que la partie extérieure (18) de l'élément de réintroduction (6) comporte un alésage intérieur (18a) situé dans le prolongement de l'alésage intérieur de la partie (16) en forme de doigt de gant et constituant une chambre de récupération et de mélange dans laquelle débouchent des canaux (24) communiquant avec les tuyauteries de liaison (7, 8, 9) aux éléments de prélèvement (3, 4, 5).

5. Dispositif suivant la revendication 4, caractérisé par le fait que la partie extérieure (18) de l'élément de réintroduction (6) comporte une ouverture taraudée (18b) dans le prolongement de la chambre (18a) débouchant à l'extérieur de la partie (18), de manière à recevoir un support de sonde (25) vissé dans l'ouverture taraudée (18b) sur lequel est fixée la sonde de température (26).

## Patentansprüche

1. Vorrichtung zum Messen der Temperatur des primären Kühlmittels eines Kernreaktors, mit einem Behälter, in dem der Kern des Reaktors angeordnet ist, und einem Primärkreislauf, der wenigstens eine Schleife aufweist, auf der ein Dampferzeuger angeordnet ist, und der Rohrleitungen aufweist, in denen das primäre Kühlmittel des Reaktors zirkuliert, wobei eine der Rohrleitungen oder heißer Arm (1) den Behälter mit dem Dampferzeuger verbindet und eine andere Rohrleitung oder kalter Arm den Rückfluß des Kühlmittels, das vom Dampferzeuger kommt, in den Behälter sicherstellt, wobei die Meßvorrichtung (10) wenigstens drei Elemente des Herausgreifens oder -nehmens von Kühlmittel (3, 4, 5) aufweist, die die Seitenwand eines im wesentlichen horizontalen Bereichs des heißen Arms (1) durchqueren und die am Umfang des heißen Arms verteilt sind, und wobei ein Element (6) der Wiedereinführung des Kühlmittels in den heißen Arm (1) durch eine äußere Rohrleitung (7, 8, 9) mit dem heißen Arm verbunden ist, mit einem jeden der Herausnahmeelemente (3, 4, 5), sowie Temperatursonden (26), die im Inneren eines jeden der Herausgreifelemente angeordnet sind, dadurch gekennzeichnet, daß das Element der Wiedereinführung (6) des primären Kühlmittels einen rohrförmigen Körper aufweist, der an dem heißen Arm (1) auf der Höhe einer Öffnung (15) befestigt ist, die seine Seitenwand in einer im wesentlichen radialen Richtung durchquert, das einen Bereich (16) in Form eines Handschuhfingers aufweist, der wenigstens teilweise im Inneren des heißen Arms (1) angeordnet ist, und mit wenigstens einer Öffnung (17) durchsetzt ist, die zur Achse des heißen Arms (1) gerichtet ist und gegenüberliegend dem frontalen Bereich des Handschuhfingers angeordnet ist, der von dem Strom des Kühlmittels (12) beaufschlagt wird, und einen Bereich (18) außerhalb des heißen Arms aufweist, in dem die Rohrleitungen (7, 8, 9) der Verbindung mit den Herausgreifelementen (3, 4, 5) münden.

2. Vorrichtung nach Anspruch 1, dadurch gekennzeichnet, daß der Bereich (16) in Form des Handschuhfingers des Wiedereinführelements (6) einen Bereich (22) aufweist, der diametral in Form eines Kranzes vergrößert ist und nach außen vorspringt, derart, daß die Halterung des Bereichs (16) in Handschuhfingerform im Inneren der Öffnung (15) sichergestellt ist, die die Seitenwand des heißen Arms (1) durchquert.

3. Vorrichtung nach einem der Ansprüche 1 oder 2, dadurch gekennzeichnet, daß der äußere Bereich (18) des Wiedereinführelements (6) durch Schweißen auf eine Zwischenrohrabzweigung (20) befestigt ist, die selbst durch Schweißen an dem heißen Arm (1) auf der Höhe der Öffnung (15) befestigt ist.

4. Vorrichtung nach einem der Ansprüche 1, 2 oder 3, dadurch gekennzeichnet, daß der äußere Bereich (18) des Wiedereinführelements (6) eine innere Ausnehmung (18a) aufweist, die in der Verlängerung der inneren Ausnehmung des Bereichs (16) in Form des Handschuhfingers angeordnet ist, und eine Auffang- und Mischkammer bildet, in der Kanäle (24) münden, die mit den Verbindungsrohrleitungen (7, 8, 9) zu den Herausgreifelementen (3, 4, 5) in Verbindung stehen.

5. Vorrichtung nach Anspruch 4, dadurch gekennzeichnet, daß der äußere Bereich (18) des Wiedereinführelements (6) eine Gewindeöffnung (18b) in der Verlängerung der Kammer (18a) aufweist, die außerhalb des Bereichs (18) mündet, derart, daß ein Sondenlager (25) aufgenommen werden kann, das in die Gewindeöffnung (18b) eingeschraubt wird, an dem eine Temperatursonde (26) befestigt ist.

## Claims

1. Device for measuring the temperature of the primary cooling fluid of a nuclear reactor comprising a container in which is arranged the reactor core and a primary circuit having at least one loop on which is arranged a steam generator and which comprises pipes in which the primary cooling fluid of the reactor circulates, one of the pipes, the hot branch (1), connecting the container to the steam generator and another pipe, the cold branch, providing for the return of the cooling fluid coming from the steam generator in the container, the measuring device (10) having at least three elements (3, 4, 5) for sampling cooling fluid which pass through the wall of a substantially horizontal part of the hot branch (1), being distributed around the periphery of the hot branch, and an element (6) for re-introducing cooling fluid into the hot branch (1), said element being connected to each of the sampling elenents (3, 4, 5) by pipes (7, 8, 9) outside the hot branch, as well as temperature probes (26) arranged inside each of the sampling elements, characterised in that the element (6) for re-introducing the primary fluid comprises a tube body fixed to the hot branch (1) at the level of an opening (15) passing through the wall thereof, in a substantially radial direction, having a part 16 shaped like the finger of a glove which is arranged at least partially inside the hot branch (1) and pierced with at least one opening (17) directed towards the axis of the hot branch (1) and located opposite the front part of the glove finger acted upon by the current of fluid (12), and a part (18) outside the hot branch, into which open the pipes (7, 8, 9) connected to the sampling elements (3, 4, 5).

2. Device according to claim 1, characterised in that the part (16) of the re-introduction element (6) which is shaped like the finger of a glove has a diametrically widened part (22) in the shape of a crown which projects outwards, so as to ensure that the part (16) shaped like a glove finger is held in place inside the opening (15) passing through the wall of the hot branch (1).

3. Device according to either of claims 1 and 2, characterised in that the outer part (18) of the re-introduction element (6) is fixed by welding to an intermediate section (20) which is in turn fixed by welding to the hot branch (1), level with the opening (15).

4. Device according to any one of claims 1, 2 and 3, characterised in that the outer part (18) of the re-introduction element (6) has an inner bore (18a) located on an extension of the inner bore of the part (16) shaped like the finger of a glove and constituting a recovery and mixing chamber into which channels (24) open which communicate with the pipes (7, 8, 9) connected to the sampling elements (3, 4, 5).

5. Device according to claim 4, characterised in that the outer part (18) of the re-introduction element (6) has a tapped opening (18b) on an extension of the chamber (18a) terminating outside the part (18), so as to receive a probe support (25) screwed into the tapped opening (18b) to which the temperature probe (26) is fixed.
